# EUROPÄISCHE PATENTANMELDUNG

(11) **EP 4 303 245 A1**
(43) Veröffentlichungstag der Anmeldung: **10.01.2024**
(21) Anmeldenummer: 22183343.7
(22) Anmeldetag: 06.07.2022
(51) Int. Cl.: C08G 18/36, C08G 18/38, C08G 18/48, C08G 18/79, C08K 3/013, C09D 175/08, C08K 3/22

(54) **POLYURETHANZUSAMMENSETZUNG GEEIGNET ALS BAUWERKSABDICHTUNG MIT VERLÄNGERTER TOPFZEIT**

(71) Anmelder: Sika Technology AG, 6340 Baar (CH)
(72) Erfinder: GLOVER, Stephen, Chorley, PR7 7BH (GB); BYRNE, Michael, Lytham, FY8 4TF (GB); ROUND, Michelle, Leyland, PR25 3YB (GB)
(74) Vertreter: Sika Patent Attorneys

(57) **Zusammenfassung**

Die vorliegende Erfindung betrifft eine Polyurethanzusammensetzung umfassend eine erste Komponente **A** und eine zweite Komponente **B,** wobei
- die erste Komponente **A**
- eine Polyolmischung **P** aufweist, enthaltend
- mindestens ein Polyol **P1** mit einem durchschnittlichen Molekulargewicht von 800 bis 30'000 g / mol, wobei das Polyol **P1:**
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird; und

- vorzugsweise mindestens ein Polyol **P2** ausgewählt aus der Gruppe bestehend aus Polyesterpolyolen und Polyetherpolyolen; und

- die zweite Komponente **B**
- mindestens ein aliphatisches Polyisocyanat **I** umfasst.

Die Polyurethanzusammensetzung enthält zusätzlich Füllstoffe **F,** eine Säure **SA** mit einem pKₐ-Wert von ≤ 4.9, einen Zinnkatalysator **K** und eine Verbindung **T,** die mindestens eine Thiolgruppe aufweist. Das molare Verhältnis aller Thiolgruppen der mindestens einen Verbindung **T** zu allen Metallatomen des mindestens einen Zinnkatalysators **K (T/K)** beträgt dabei von 2.75:1 bis 10:1. Die Polyurethanzusammensetzung ist geeignet für Dachbeschichtungen und weist unabhängig von den Aushärtungsbedingungen sowohl eine lange Topfzeit wie auch eine kurze Aushärtungszeit auf.

## Beschreibung

### Technisches Gebiet

Die Erfindung betrifft das Gebiet der Polyurethanzusammensetzungen und ihre Verwendung, insbesondere als Bauwerksabdichtung.

### Stand der Technik

Zweikomponentige Polymethylmethacrylat-Zusammensetzungen werden bereits seit langem als Dachbeschichtungen eingesetzt. Sie haben den Vorteil, dass sie nach dem Mischen schnell aushärten und deshalb nach kürzerer Zeit begehbar sind. Sie erfüllen auch die Anforderungen an eine dauerhafte, wetter- und wasserbeständige Dachbeschichtung. Solche Systeme haben jedoch den Nachteil einer starken VOC-Emission.

Bauwerksabdichtungen und Dachbeschichtung im Besonderen sollen idealerweise unabhängig von den Aushärtungsbedingungen sowohl eine lange Topfzeit wie auch eine kurze Aushärtungszeit aufweisen. Wünschenswert wären eine Offenzeit von 15 min - 45 min sowie eine Aushärtungszeit von 60 min - 220 min bei Aushärtungsbedingungen über den gesamten Temperaturbereich von 5 °C bis 21 °C, insbesondere bei 90 % relativer Luftfeuchtigkeit.

Bei der Verwendung von zweikomponentigen Polyurethanzusammensetzungen für die Anwendung als Bauwerksabdichtungen wäre es daher wünschenswert, eine genügend lange Topfzeit für die Applikation auf das Substrat mit einer anschliessend zügigen Aushärtung und schneller Überarbeitbarkeit/Begehbarkeit kombinieren zu können. Dies lässt sich mit heutigen zweikomponentigen Polyurethanzusammensetzungen aber kaum erreichen. Entweder ist die Topfzeit zu kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden.

Es wurden in anderen technischen Gebieten zweikomponentige Polyurethanzusammensetzungen entwickelt, die eine lange, sogar innerhalb gewisser Grenzen einstellbare Topfzeit aufweisen, so dass eine Verarbeitung auch grösserer Bau- oder Fertigungsteile möglich ist, aber die nach Applikation auch sehr rasch aushärten und innert Stunden bis wenigen Tagen, Festigkeiten und Elastizität im Sinne von strukturellen Verklebungen aufweisen. Eine solche zweikomponetige Polyurethanzusammensetzung im Bereich des strukturellen Klebens ist in WO 2019/002538 A1 offenbart. Diese Veröffentlichung lehrt spezielle Katalysatorsysteme umfassend einen Metallkatalysator und Thiolgruppen-haltige Verbindungen, welche eine einstellbare Topfzeit und anschliessend eine rasche Aushärtung der Zusammensetzung erlauben.

WO 2022043383 A1 befindet sich auf dem Gebiet der Fussbodenbeschichtungen und offenbart eine zweikomponentige Polyurethanzusammensetzungen enthaltend einen Metallkatalysator und Thiolgruppen-haltige Verbindungen, bei welcher die Topfzeit und die Aushärtung der Zusammensetzung an die Aushärtungsbedingungen angepasst werden kann.

Im Bereich der Lackindustrie offenbart EP 0454219 Polyurethanzusammensetzung basierend auf Polyacrylpolyolen, aliphatischen Polyisocyanaten, einen mit Trimethylolpropane tris(3-mercaptopropionate) komplexierten Dibutylzinndilaurat-Katalysator und einem hohen Anteil an organischen Lösungsmitteln.

US 2019/0106527 A1 offenbart Beschichtungen für Fahrzeuge umfassend ein Polyol, vorzugsweise Polyesterpolyole oder Polyacrylatpolyole, ein Polyisocyanat, einen Katalysator, eine tertiäre Säure, gegebenenfalls ein Komplexbildner, der mindestens eine -SH-Gruppe enthält und einem hohen Anteil an organischen Lösungsmitteln.

Es wäre daher wünschenswert, Polyurethanzusammensetzungen für Dachbeschichtung zur Verfügung zu stellen, welche unabhängig von den Aushärtungsbedingungen sowohl eine lange Topfzeit wie auch eine kurze Aushärtungszeit aufweisen. Wünschenswert wären eine Topfzeit von 15 min - 45 min sowie eine Aushärtungszeit von 60 min - 220 min bei Aushärtungsbedingungen über den gesamten Temperaturbereich von 5 °C bis 21 °C, insbesondere bei 90 % relativer Luftfeuchtigkeit.

### Darstellung der Erfindung

Aufgabe der vorliegenden Erfindung ist es daher, eine Polyurethanzusammensetzungen für Dachbeschichtungen zur Verfügung zu stellen, welche unabhängig von den Aushärtungsbedingungen sowohl eine lange Topfzeit wie auch eine kurze Aushärtungszeit aufweisen.

Überraschenderweise wird diese Aufgabe mit der erfindungsgemässen Polyurethanzusammensetzung gemäss Anspruch 1 gelöst. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft Polyurethanzusammensetzung umfassend eine erste Komponente **A** und eine zweite Komponente **B,** wobei
- die erste Komponente **A**
   - eine Polyolmischung **P** aufweist, enthaltend
      - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1**:
         ein polyhydroxyfunktionelles Fett und / oder ein polyhydroxyfunktionelles Öl ist, oder
         ein Polyol, das durch chemische Modifizierung von natürlichen Fetten und / oder natürlichen Ölen erhalten wird; und
      - vorzugsweise mindestens ein Polyol **P2** ausgewählt aus der Gruppe bestehend aus Polyesterpolyolen und Polyetherpolyolen; und
- die zweite Komponente **B**
   - mindestens ein aliphatisches Polyisocyanat **I** umfasst;
   wobei die Polyurethanzusammensetzung zusätzlich 5 Gew.-% bis 70 Gew.-%, vorzugsweise 20 Gew.-% bis 50 Gew.-%, mindestens eines Füllstoffs **F,** bezogen auf das Gesamtgewicht der
   Polyurethanzusammensetzung, aufweist,
   und wobei die Polyurethanzusammensetzung zusätzlich 0.7 - 2.9 mM, bezogen auf 100 g der Polyurethanzusammensetzung, mindestens einer Säure **SA** mit einem pKₐ-Wert von ≤ 4.9 aufweist,
   sowie mindestens einen Zinnkatalysator **K** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **K (T/K)** von 2.75:1 bis 10:1 liegt und das molare Verhältnis aller NCO-Gruppen der Polyurethanzusammensetzung zu allen Metallatomen des mindestens einen Zinnkatalysators **K (NCO/K)** vorzugsweise von 20 bis 200 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird.

Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der Komponenten verarbeitet werden kann, bevor die Viskosität durch das Voranschreiten der Vernetzungsreaktion zu hoch für eine weitere Verarbeitung geworden ist.

Als "Aushärtungszeit" wird in diesem Dokument die Zeit bezeichnet, welche benötigt wird, um eine ausreichende Härte der Polyurethanzusammensetzung sicherzustellen, insbesondere in Bezug auf ihre Überarbeitbarkeit/Begehbarkeit.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25 % oder im Bereich von 0.5 bis 5.0%, gemeint sind.

Als "Raumtemperatur" wird im vorliegenden Dokument eine Temperatur von 23 °C bezeichnet.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen. Die "mittlere OH-Funktionalität" stellt die Anzahl der OH-Gruppen pro Polymermolekül, gemittelt über alle Polymermoleküle, dar. Enthalten beispielsweise 50% aller Polymermoleküle zwei und die anderen 50% drei Hydroxygruppen, so ergibt sich eine mittlere OH-Funktionalität von 2,5. Die mittlere OH-Funktionalität kann insbesondere durch Berechnung aus der Hydroxyzahl und dem über GPC ermittelten Molekulargewicht Mₙ ermittelt werden.

Die erfindungsgemässe Polyurethanzusammensetzung umfasst eine erste Komponente **A** und eine zweiten Komponente **B,** welche erst bei der Applikation der Polyurethanzusammensetzung gemischt werden und vorher in getrennten Verpackungen aufbewahrt werden.

Die erste Komponente **A** enthält eine Polyolmischung **P.**

Vorzugsweise beträgt der Anteil der Polyolmischung **P** 5 Gew.-% bis 90 Gew.-%, vorzugsweise 10 Gew.-% bis 80 Gew.-%, 20 Gew.-% bis 70 Gew.-%, 30 Gew.-% bis 60 Gew.-%, insbesondere 40 Gew.-% bis 50 Gew.-%, bezogen auf die Komponente **A.**

Es kann weiter vorteilhaft sein, wenn der Anteil der Polyolmischung **P** 5 Gew.-% bis 70 Gew.-%, vorzugsweise 10 Gew.-% bis 60 Gew.-%, 15 Gew.-% bis 50 Gew.-%, 20 Gew.-% bis 45 Gew.-%, insbesondere 30 Gew.-% bis 40 Gew.-%, bezogen auf das Gesamtgewicht der Polyurethanzusammensetzung, beträgt.

Die Polyolmischung **P** enthält mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1**:
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird.

Beispiele für chemisch modifizierte natürliche Fette und / oder Öle sind Polyole, die aus Epoxypolyestern oder Epoxypolyethern erhalten werden, die beispielsweise durch Epoxidierung von ungesättigten Ölen, durch anschließende Ringöffnung mit Carbonsäuren oder Alkoholen erhalten werden, Polyole, die durch Hydroformylierung und Hydrierung von ungesättigten Ölen erhalten werden, oder Polyole die aus natürlichen Fetten und / oder Ölen durch Abbauprozesse wie Alkoholyse oder Ozonolyse und anschließende chemische Verknüpfung der so erhaltenen Abbauprodukte oder Derivate davon, beispielsweise durch Umesterung oder Dimerisierung, erhalten werden. Geeignet sind auch Polyole, die durch Polyoxyalkylierung von natürlichen Ölen wie Rizinusöl erhalten werden und beispielsweise unter dem Handelsnamen Lupranol Balance^{®} der Elastogran GmbH erhältlich sind. Geeignete Abbauprodukte von natürlichen Fetten und / oder Ölen sind insbesondere Fettsäuren und Fettalkohole und Fettsäureester, insbesondere die Methylester (FAME), die beispielsweise durch Hydroformylierung und Hydrierung zu Hydroxyfettsäure derivatisiert werden können Ester.

Die oben erwähnten Polyole **P1** haben gewöhnlich ein relativ hohes durchschnittliches Molekulargewicht zwischen 800 und 30'000 g / mol, vorzugsweise zwischen 850 und 20'000 g / mol, bevorzugter zwischen 900 und 10'000 g / mol und vorzugsweise ein durchschnittliche OH-Funktionalität im Bereich von 1,6 bis 3.

Vorzugsweise ist das Polyol **P1** Rizinusöl oder eine chemische Modifikation davon, insbesondere eine chemische Modifikation von Rizinusöl, besonders bevorzugt ein Reaktionsprodukt von Rizinusöl mit Ketonharzen.

Besonders bevorzugt handelt es sich bei dem Polyol **P1** um ein Polyol mit einer OH-Zahl von 110 bis 200 mg KOH / g. Bevorzugt wird eine OH-Zahl von 140 bis 190 mg, insbesondere 140 bis 170 mg, insbesondere bevorzugt 150 bis 170 mg KOH / g.

Besonders bevorzugt werden Reaktionsprodukte von Rizinusöl mit Ketonharzen auf Cyclohexanonbasis, insbesondere solche, die beispielsweise von der Nuplex Resins GmbH, Deutschland, unter dem Namen Setathane^{®} 1150, Setathane^{®} 1155 und Setathane^{®} 1160 verkauft werden.

In dem vorliegenden Dokument wird der Begriff "Rizinusöl" vorzugsweise so verstanden, dass er Rizinusöl bedeutet, wie es im Online Römpp Chemie Lexikon (Thöme Verlag) beschrieben ist, abgerufen am 23.12.2016.

In dem vorliegenden Dokument wird der Begriff "Ketonharz" vorzugsweise so verstanden, dass er Ketonharz bedeutet, wie in Online Römpp Chemie Lexikon, Thieme Verlag, abgerufen am 23.12.2016, beschrieben.

Vorzugsweise enthält die Polyolmischung **P** mindestens ein Polyol **P2** ausgewählt aus der Gruppe bestehend aus Polyesterpolyolen und Polyetherpolyolen.

Das Polyol **P2** weist in allen Ausführungsformen bevorzugt ein mittleres Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1'000 bis 2'000 g/mol, auf.

Das Polyol **P2** weist in allen Ausführungsformen bevorzugt eine mittlere OH-Funktionalität im Bereich von 2 bis 4, insbesondere 2 bis 3.5, besonders bevorzugt 2 bis 3, auf.

Das Polyol **P2** weist in allen Ausführungsformen bevorzugt eine OH-Zahl im Bereich von 20 bis 600 mg KOH/g, 50 bis 600 mg KOH/g, 100 bis 600 mg KOH/g, insbesondere 200 bis 600 mg KOH/g, 300 bis 600 mg KOH/g, besonders bevorzugt 350 bis 600 mg KOH/g, auf.

Als Polyetherpolyole, auch Polyoxyalkylenpolyole oder Oligoetherole genannt, sind insbesondere jene als Polymer **P2** geeignet, welche Polymerisationsprodukte von Ethylenoxid, 1,2-Propylenoxid, 1,2- oder 2,3-Butylenoxid, Oxetan, oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet als Polyol **P2** sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet als Polyol **P2** sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol. Ebenfalls als Polyol **P2** besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole. Geeignete solche Polyether-basierte Polymere P2 sind beispielsweise erhältlich unter den Handelsnamen Acclaim^{®} und Desmophen^{®} von Covestro, insbesondere Acclaim^{®} 4200, Desmophen^{®} 5034, Desmophen^{®} 1381 BT und Desmophen^{®} 28HS98, unter dem Handelsnamen Voranol^{®} von Dow, insbesondere Voranol^{®} EP 1900 und Voranol^{®} CP 4755, sowie unter dem Handelsnamen Dianol^{®} von Arkema, insbesondere Dianol^{®} 3130 HP.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Maleinsäure, Fumarsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind hydrophile Polyesterdiole, insbesondere solche, die hergestellt sind aus Adipinsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, und 1,4-Cyclohexandimethanol als zweiwertigem Alkohol.

Als Polyesterpolyole geeignet sind beispielsweise solche erhältlich unter dem Handelsnamen Kuraray^{®} von Kuraray, insbesondere Kuraray^{®} F-510, und solche erhältlich unter dem Handelsnamen K-Flex^{®} von King Industries, insbesondere K-Flex^{®} 188.

Besonders geeignete Polyole **P2** sind Polyetherpolyole, insbesondere ausgewählt aus der Liste bestehend aus Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol, am meisten bevorzugt ist Polyoxypropylentriol.

Am meisten bevorzugt ist das Polyol **P2** ein Polyetherpolyol, insbesondere ein Polyetherpolyol mit einer mittleren OH-Funktionalität von mindestens 2.5 und bevorzugt mit Propylenglykol-Repetiereinheiten im Polymerrückgrat.

Vorzugsweise beträgt das Gewichtsverhältnis des Polyols **P1** zum Polyol **P2 ((P1)** / **(P2))** von 3 bis 10, vorzugsweise 5 bis 9, am meisten bevorzugt 6 bis 8. Ein Verhältnis von weniger als 3 führt zum tieferen Dehnungswerten, ein Verhältnis von mehr als 10 führt zu tieferen mechanischen Eigenschaften und Zähigkeit.

Vorzugsweise beträgt die Gesamtmenge der Summe des Polyols **P1** und des Polyols **P2** mehr als 75 Gew .-%, vorzugsweise als 80 Gew .-%, als 90 Gew .-%, als 95 Gew .-%, insbesondere als 98 Gew .-%, der Polyolmischung **P.**

Vorzugsweise weist die Polyolmischung **P** mehr als 80 Gew .-%, mehr als 90 Gew .-%, insbesondere mehr als 95 Gew .-%, der Gesamtmenge der NCO-reaktiven Gruppen der Polyurethanzusammensetzung auf.

Die zweite Komponente **B** umfasst mindestens ein aliphatisches Polyisocyanat **I**.

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Geeignete aliphatische Polyisocyanate **I** sind insbesondere monomere Di- oder Triisocyanaten, sowie Oligomere, Polymere und Derivate von monomeren Di- oder Triisocyanate, sowie beliebige Mischungen davon.

Als aliphatische monomere Polyisocyanate bevorzugt sind aliphatische oder cycloaliphatische Diisocyanate, insbesondere HDI, TMDI, Cyclohexan-1,3- oder-1,4-diisocyanat, IPDI, H₁₂MDI, 1,3- oder 1,4-Bis-(isocyanatomethyl)cyclohexan und XDI.

Ein besonders bevorzugtes monomeres Polyisocyanat ist HDI, IPDI oder H₁₂MDI. Am meisten bevorzugt ist HDI oder IPDI, insbesondere HDI.

Geeignete Oligomere, Polymere und Derivate der genannten monomeren Di- und Triisocyanate sind insbesondere abgeleitet von HDI oder IPDI, insbesondere HDI. Davon insbesondere geeignet sind kommerziell erhältliche Typen, beispielsweise Desmodur^{®} N 75, Desmodur^{®} N 3600 und Desmodur^{®} N 3900 (alle von Covestro). Vorzugsweise weisen sie einen NCO-Gehalt von 16 bis 24 Gewichts-% auf, vorzugsweise 20 bis 24 Gewichts-%.

Als aliphatische Polyisocyanate besonders bevorzugt sind Oligomere, Polymere und Derivate der abgeleitet von HDI oder IPDI, insbesondere HDI.

Vorzugsweise weisen sie einen NCO-Gehalt von 16 bis 24 Gewichts-% auf, vorzugsweise 20 bis 24 Gewichts-%.

Es ist weiter vorteilhaft, wenn die Summe der NCO-Gruppen, welche nicht vom aliphatischen Polyisocyanat **I** herrühren, ≤20%, insbesondere ≤10%, insbesondere bevorzugt ≤5%, am meisten bevorzugt ≤1 %, beträgt, bezogen auf die Summe aller NCO -Gruppen der Polyurethanzusammensetzung.

Vorzugsweise beträgt der Anteil des aliphatischen Polyisocyanats **I** ≥ 90 Gew.-%, insbesondere ≥ 95 Gew.-%, insbesondere bevorzugt ≥99 Gew.-%, bezogen auf das Gesamtgewicht der zweiten Komponente.

Vorzugsweise weist die Polyurethanzusammensetzung einen Anteil an aromatischen Polyisocyanaten von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung. Aromatische Polyisocyanate sind dahingehend von Nachteil, dass dadurch die Topfzeit stark verkürzt wird und die ausgehärteten Polyurethanzusammensetzung zu Vergilbung neigen.

Vorzugsweise weist die Polyurethanzusammensetzung einen Anteil an Polyasparaginsäureestern von weniger als 15 Gew.-%, von weniger als 10 Gew.-%, von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung. Polyasparaginsäureester sind dahingehend von Nachteil, dass dadurch die Aushärtungsreaktion zu schnell verläuft, insbesondere bei hoher Luftfeuchtigkeit.

Vorzugsweise beträgt das Gewichtsverhältnis von Komponente (A): Komponente (B) 5: 1 bis 2: 1, bevorzugter 4: 1 bis 3: 1.

Vorzugsweise liegt das Molverhältnis zwischen freien NCO-Gruppen und NCO-reaktiven Gruppen, vorzugsweise OH-Gruppen, in der erfindungsgemäßen Zusammensetzung vor dem Mischen zwischen 0,8 - 1,2, vorzugsweise 0,9 - 1,1, insbesondere 0,95 - 1,05.

Die Polyurethanzusammensetzung enthält zusätzlich 5 Gew.-% bis 70 Gew.-% mindestens eines Füllstoffs **F,** bezogen auf das Gesamtgewicht der Polyurethanzusammensetzung. Der Füllstoff **F** kann sich in der ersten Komponente **A** oder in der zweiten Komponente **B** befinden, insbesondere befindet er sich der ersten Komponente **A.**

Vorzugsweise handelt es sich um Füllstoffe ausgewählt aus der Liste bestehend aus gemahlenen oder gefällten Calciumcarbonaten, welche gegebenenfalls mit Fettsäuren, insbesondere Stearaten, beschichtet sind, Baryte (Schwerspate), Quarzmehle, Quarzsande, Titandioxid, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver und Hohlkugeln.

Bevorzugt enthält die Polyurethanzusammensetzung mindestens einen Füllstoff **F** ausgewählt aus der Gruppe bestehend aus Aluminiumhydroxide, Titandioxid, Calciumcarbonat, Russ, Quarzsande, Kaolin, Baryt, Talk, Quarzmehl, Dolomit, Wollastonit, Kaolin, calciniertes Kaolin und Glimmer (Mica).

Als Füllstoffe **F** besonders bevorzugt sind Füllstoffe ausgewählt aus der Liste bestehend aus Aluminiumhydroxide, Titandioxid, gemahlenen Calciumcarbonaten, calcinierte Kaoline, Quarzsande und Baryt.

Es ist kann von Vorteil sein, eine Mischung verschiedener Füllstoffe einzusetzen. Am meisten bevorzugt sind Kombinationen von Aluminiumhydroxide und Titandioxid.

Vorzugsweise beträgt die Teilchengrösse der Füllstoffe **F** 0,1 bis 50 µm, bevorzugter 1 bis 30 µm.

Vorzugsweise beträgt der Anteil an Füllstoffen **F** 10 - 55 Gew.-%, 15 - 50 Gew.-%, 20 - 50 Gew.-%, 25 - 45 Gew.-%, insbesondere 30 - 40 Gew.-%, bezogen auf das Gesamtgewicht der Polyurethanzusammensetzung.

Die Polyurethanzusammensetzung enthält zusätzlich mindestens einen Zinnkatalysator **K** für die Reaktion von Hydroxylgruppen und Isocyanatgruppen umfasst, der Thiokomplexe bilden kann.

Vorzugsweise handelt es sich bei dem Zinnkatalysator **K** um eine Organozinn-Verbindung, insbesondere um eine Organozinn (IV)-Verbindung.

Insbesondere handelt es sich um einen Zinnkatalysator **K** ausgewählt aus der Liste bestehend aus Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat, Dioctylzinndiacetylacetonat, Dioctylzinndineodecanoat, Bis[(2-ethyl-1-oxohexyl)oxy]dioctylstannan, Bis(neodecanoyloxy)dioctylstannan, Bis(dodecylthio)dioctylstannan und Bis(dodecylthio)dimethylstannan. Insbesondere handelt es sich um Dibutylzinndilaurat, Dioctylzinndiacetylacetonat, Dioctylzinndineodecanoat oder Bis(dodecylthio)dioctylstannan, besonders bevorzugt um Dioctylzinndineodecanoat.

Es kann vorteilhaft sein, wenn sich der Zinnkatalysator **K** nur in der ersten Komponente **A** befindet.

Besonders bevorzugt ist der Zinnkatalysator **K** zu einem Teil in einer dritten Komponente **C,** bei welcher es sich nicht um die erste Komponente **A** oder die zweite Komponente **B** handelt, enthalten. Vorzugsweise befindet sich 20 Gew.-% - 70 Gew.-%, insbesondere 30 Gew.-% - 60 Gew.-%, besonders bevorzugt 40 Gew.-% - 50 Gew.-% des Zinnkatalysators **K,** bezogen auf die Gesamtmenge an Zinnkatalysators **K** in der Polyurethanzusammensetzung, in der dritten Komponente **C.** Dies hat den Vorteil, dass dadurch eine bessere Lagerstabilität erreicht wird.

Die Menge an Zinnkatalysator **K,** bezogen auf die gesamte Polyurethanzusammensetzung, liegt bevorzugt im Bereich von 0.8 bis 1.5 Gew.-%, bevorzugt 0.9 bis 1.4 Gew.-%, besonders bevorzugt 1.0 bis 1.3 Gew.-%, bezogen auf die gesamte Polyurethanzusammensetzung.

Vorzugsweise weist die Polyurethanzusammensetzung einen Anteil von weniger als 0.5 Gew.-%, weniger als 0.1 Gew.-%, weniger als 0.05 Gew.-%, weniger als 0.01 Gew.-%, weniger als 0.001 Gew.-%, bezogen auf das Gesamtgewicht der Polyurethanzusammensetzung, an Katalysatoren für die Reaktion von Hydroxylgruppen und Isocyanatgruppen auf, welche nicht vorgenannte Zinnkatalysatoren **K** sind. Insbesondere handelt es sich dabei um Metallkatalysatoren, insbesondere Bismut-, Zink- oder Zirkoniumverbindungen, was Komplexe und Salze dieser Metalle einschliesst, bevorzugt um Komplexverbindungen von Bismut (III) oder Zirkonium (IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Die Polyurethanzusammensetzung enthält zusätzlich mindestens eine Verbindung **T,** die mindestens eine Thiolgruppe aufweist. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 2 bis 4, am meisten bevorzugt 2 oder 3 Thiolgruppen.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind vorzugsweise ausgewählt aus der Liste bestehend aus Ethylenglykol-di(3-mercaptopropionat), Ethylenglykol-dimercaptoacetat, Dipentaerythritol-hexa(3-mercaptopropionat), Trimethylolpropan tris(3-mercaptopropionat), 2,3-Dimercapto-1,3,4-thiadiazol, Pentaerythritol-tetrakis(3-mercaptopropionat) und 3,6-Dioxa-1,8-octandithiol.

Bevorzugt ist die Verbindung **T** ausgewählt aus der Gruppe bestehend aus Ethylenglykol-di(3-mercaptopropionat), Ethylenglykol-dimercaptoacetat und Dipentaerythritol-hexa(3-mercaptopropionat), am meisten bevorzugt Ethylenglykol-di(3-mercaptopropionat).

Die Menge an Verbindung **T,** bezogen auf die gesamte Polyurethanzusammensetzung, liegt bevorzugt im Bereich von 0.50 bis 1.00 Gew.-%, bevorzugt 0.60 bis 0.90 Gew.-%, insbesondere 0.70 bis 0.80 Gew.-%, bezogen auf die gesamte Polyurethanzusammensetzung.

Bevorzugt ist die Verbindung **T** nur in einer dritten Komponente **C** enthalten. Vorzugsweise handelt es sich bei der dritten Komponente **C** um die vorgenannte Komponente **C** vorzugsweise enthaltend den erwähnten Zinnkatalysator **K.** Dies hat den Vorteil, dass dadurch eine bessere Lagerstabilität erreicht wird.

Am meisten bevorzugt sind die gesamte Verbindung T und 20 Gew.-% - 70 Gew.-%, insbesondere 30 Gew.-% - 60 Gew.-%, besonders bevorzugt 40 Gew.-% - 50 Gew.-% des Zinnkatalysators K, bezogen auf die Gesamtmenge an Zinnkatalysator K in der Polyurethanzusammensetzung, in der dritten Komponente C enthalten.

Das molare Verhältnis aller Thiolgruppen der mindestens einen Verbindung **T** zu allen Metallatomen des mindestens einen Zinnkatalysators **K (T/K)** liegt von 2.75:1 bis 10:1.

Vorzugsweise beträgt das molare Verhältnis **(T/K)** 3:1 bis 7.5:1, insbesondere 3.5:1 bis 5:1, am meisten bevorzugt 3.5:1 bis 4:1.

Ein molares Verhältnis **(T/K)** von kleiner als 2.75 führt zu einer zu kurzen Topfzeit, insbesondere bei Temperaturen von 21°C und 90% r.F. Dies ist beispielsweise in Tabelle 2 im Vergleich von Ex.1-3 mit Ref.1 bis Ref.4 ersichtlich. Die vorgenannten bevorzugten molaren Verhältnisse **(T/K)** sind dahingehend vorteilhaft, dass dadurch ein besonders gutes Verhältnis von besonders bevorzugter Topfzeit und besonders bevorzugter Aushärtungszeit erhalten werden kann. Dies ist beispielsweise in Tabelle 2 im Vergleich von Ex.2 mit Ex.1 und Ex.3 ersichtlich. Ein molares Verhältnis von grösser als 10:1 ist dahingehend von Nachteil, dass dadurch Polyurethanzusammensetzung erhalten werden, die insbesondere bei einer Aushärtung bei 5 °C und 90 % relativer Luftfeuchtigkeit Aushärtungszeiten von mehr als 4 Stunden aufweisen und lange zu klebrigen Oberflächen neigen.

Das molare Verhältnis aller NCO-Gruppen der Polyurethanzusammensetzung zu allen Metallatomen des mindestens einen Zinnkatalysators **K (NCO/K)** beträgt vorzugsweise von 20 bis 200.

Insbesondere beträgt das molare Verhältnis **(NCO/K)** 50 bis 125, vorzugsweise 60 bis 100, am meisten bevorzugt 65 bis 85.

Die vorgenannten bevorzugten molaren Verhältnisse **(NCO/K)** sind dahingehend vorteilhaft, dass dass dadurch ein besonders gutes Verhältnis von besonders bevorzugter Topfzeit und besonders bevorzugter Aushärtungszeit erhalten werden kann. Dies ist beispielsweise in Tabelle 2 im Vergleich von Ex.2 mit Ex.1 und Ex.3 ersichtlich.

Die Polyurethanzusammensetzung umfasst 0.7 - 2.9 mM, bezogen auf 100 g der Polyurethanzusammensetzung, mindestens einer Säure **SA** mit einem pKₐ-Wert von ≤ 4.9. Die mindestens eine Säure **SA** kann als freie Säuren oder blockiert eingesetzt werden, vorzugsweise werden freie Säuren eingesetzt.

Es ist vorteilhaft, wenn die mindestens eine Säure **SA** einen pKₐ-Wert von ≤ 3, vorzugsweise einen pKₐ-Wert von ≤ 1, insbesondere einen pKₐ-Wert von ≤ 0, aufweist. Ein pKa-Wert von ≤ 4.9 führt zu einer ausreichend langen Topfzeit in Verbindung mit einer ausreichend kurzen Aushärtungszeit. Dies ist beispielsweise in Tabelle 3 im Vergleich von Ex.2 mit Ref.8 bis Ref.11 ersichtlich.

Vorzugsweise beträgt der Anteil der mindestens einen Säure **SA** 0.8 - 2.0 mM, vorzugsweise 0.9 - 1.5 mM, besonders bevorzugt 0.9 - 1.25 mM, bezogen auf 100 g der Polyurethanzusammensetzung. Dies hat den Vorteil, dass dadurch ein besonders gutes Verhältnis von besonders bevorzugter Topfzeit und besonders bevorzugter Aushärtungszeit erhalten werden kann. Dies ist beispielsweise in Tabelle 3 im Vergleich von Ex.2 mit Ref.5 bis Ref.7 ersichtlich.

Bei der mindestens einen Säure **SA** mit einem pKa-Wert von ≤ 4.9 handelt es sich vorzugsweise um ein- oder mehrwertige, insbesondere einwertige, organische oder anorganische, bevorzugt organische Säuren, insbesondere bevorzugt organische Sulfonsäuren.

Bevorzugte anorganische Säuren sind ausgewählt aus der Gruppe bestehend aus Schwefelsäure, Pyrophosphorsäure, schweflige Säure, Tetrafluoroborsäure, Trichloressigsäure, Dichloressigsäure, Oxalsäure, Nitroessigsäure.

Besonders bevorzugt ist die mindestens eine Säure **SA** ausgewählt aus der Gruppe bestehend aus Methansulfonsäure, para-Toluolsulfonsäure, Benzolsulfonsäure, Dodecylbenzolsulfonsäure, Cyclododekansulfonsäure und Camphersulfonsäure, am meisten bevorzugt Benzolsulfonsäure.

Vorzugsweise weist die Polyurethanzusammensetzung einen Anteil an organischen Lösungsmitteln, insbesondere organischen Lösungsmitteln mit einem Siedepunkt bei 23 °C von weniger als 200 °C, von weniger als 10 Gew.-%, weniger als 7.5 Gew.-%, vorzugsweise weniger als 5 Gew.-% auf, bezogen auf das Gesamtgewicht der Polyurethanzusammensetzung.

Bei den genannten organischen Lösungsmitteln handelt es sich insbesondere um organische Lösungsmittel ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, Methylenchlorid, Propylencarbonat, Butyrolacton, N-Methylpyrrolidon und N-Ethylpyrrolidon.

Weiter kann es vorteilhaft sein, wenn die die Polyurethanzusammensetzung einen Anteil an vorgenannten Weichmachern von weniger als 5 Gew.-%, von weniger als 2 Gew.-%, weniger als 1 Gew.-%, weniger als 0.5 Gew.-%, weniger als 0.1 Gew.-% aufweist, bezogen auf das Gesamtgewicht der Polyurethanzusammensetzung.

Solche Weichmacher sind insbesondere ausgewählt aus der Liste bestehend aus Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononylcyclohexan-1,2-dicarboxylat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene und Polyisobutene.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Chromoxide oder Eisenoxide;
- Fasern;
- Haftvermittler;
- Rheologie-Modifizierer;
- flammhemmende Substanzen;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in solchen Zusammensetzungen eingesetzte Substanzen.

Die Polyurethanzusammensetzung enthält bevorzugt weniger als 0.5 Gew.-%, insbesondere weniger als 0.1 Gew.-%, weniger als 0.01 Gew.-%, besonders bevorzugt weniger als 0.001 Gew.-%, bezogen auf die gesamte Zusammensetzung, an einer tertiäre Säure der Formel RR'R"CCOOH, wobei jede R-, R'- und R"-Gruppe unabhängig eine Alkyl-, Alkenyl-, Aryl- oder Aralkylgruppe ist, die mindestens ein Kohlenstoffatom enthält, mit der Vorraussetzung, dass zwei oder drei der R-, R'- und R"-Gruppen verbunden werden können, um eine Ringstruktur zu bilden, und wobei die R-, R'- und / oder R"-Gruppen substituiert sein können und wobei die Gesamtzahl der Kohlenstoffatome in der R-, R'- und R"-Gruppen im Bereich von 3 bis 40 liegt.

Eine bevorzugte Polyurethanzusammensetzung umfasst eine erste Komponente A und eine zweite Komponente B, wobei
- die erste Komponente **A**
   - eine Polyolmischung **P** aufweist, enthaltend
   - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen, vorzugsweise handelt es sich um ein Polyol mit einer OH-Zahl von 110 bis 200 mg KOH/g, 140 bis 190 mg KOH/g, insbesondere 140 bis 170 mg KOH/g, insbesondere bevorzugt 150 bis 170 mg KOH/g; und
   - vorzugsweise mindestens ein Polyol **P2** ausgewählt aus der Gruppe bestehend aus Polyesterpolyolen und Polyetherpolyolen, bevorzugt Polyetherpolyole, insbesondere bevorzugt Polyoxyethylenpolyole, Polyoxypropylenpolyole und Polyoxypropylenpolyoxyethylenpolyole, insbesondere Polyole mit einem mittleren Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1'000 bis 2'000 g/mol, vorzugsweise Polyole mit einer mittleren OH-Funktionalität im Bereich von 2 bis 4, insbesondere 2 bis 3.5, besonders bevorzugt 2 bis 3;
   - wobei vorzugsweise das Gewichtsverhältnis des Polyols **P1** zum Polyol **P2 ((P1)** / **(P2))** von 3 bis 10, vorzugsweise 5 bis 9, am meisten bevorzugt 6 bis 8, beträgt; und
- die zweite Komponente **B**
   - mindestens ein aliphatisches Polyisocyanat **I** umfasst, insbesondere Oligomere, Polymere und Derivate der abgeleitet von HDI oder IPDI, insbesondere HDI, insbesondere mit einem NCO-Gehalt von 16 bis 24 Gewichts-% auf, vorzugsweise 20 bis 24 Gewichts-%.

Die bevorzugte Polyurethanzusammensetzung umfasst weiter:
- 5 Gew.-% bis 70 Gew.-%, 10 - 55 Gew.-%, 15 - 50 Gew.-%, 20 - 50 Gew.-%, 25 - 45 Gew.-%, insbesondere 30 - 40 Gew.-%, mindestens eines Füllstoffs **F,** bezogen auf das Gesamtgewicht der Polyurethanzusammensetzung, insbesondere ausgewählt aus der Gruppe bestehend aus Aluminiumhydroxide, Titandioxid, gemahlenen Calciumcarbonaten, calcinierte Kaoline, Quarzsande und Baryt; und
- mindestens einen Zinnkatalysator **K** für die Reaktion von Hydroxylgruppen und Isocyanatgruppen umfasst, der Thiokomplexe bilden kann, insbesondere eine Organozinn-Verbindung, insbesondere um eine Organozinn (IV)-Verbindung; und
- mindestens eine Verbindung **T,** die mindestens eine Thiolgruppe, insbesondere 2 bis 4, am meisten bevorzugt 2 oder 3 Thiolgruppen aufweist, insbesondere ausgewählt aus der Liste bestehend aus Ethylenglykol-di(3-mercaptopropionat), Ethylenglykoldimercaptoacetat, Dipentaerythritol-hexa(3-mercaptopropionat), Trimethylolpropan tris(3-mercaptopropionat), 2,3-Dimercapto-1,3,4-thiadiazol, Pentaerythritol-tetrakis(3-mercaptopropionat) und 3,6-Dioxa-1,8-octandithiol; und
- das molare Verhältnis aller Thiolgruppen der mindestens einen Verbindung **T** zu allen Metallatomen des mindestens einen Zinnkatalysators **K (T/K)** von 2.75:1 bis 10:1, insbesondere 3:1 bis 7.5:1, insbesondere 3.5:1 bis 5:1, am meisten bevorzugt 3.5:1 bis 4:1 liegt; und
- das molare Verhältnis aller NCO-Gruppen der Polyurethanzusammensetzung zu allen Metallatomen des mindestens einen Zinnkatalysators **K (NCO/K)** von vorzugsweise 20 bis 200, 50 bis 125, vorzugsweise 60 bis 100, am meisten bevorzugt 65 bis 85 liegt.

Vorzugsweise liegt das Molverhältnis zwischen freien NCO-Gruppen und NCO-reaktiven Gruppen, vorzugsweise OH-Gruppen, in der bevorzugten Zusammensetzung vor dem Mischen zwischen 0,8 - 1,2, vorzugsweise 0,9 - 1,1, insbesondere 0,95 - 1,05.

Vorzugsweise weist die bevorzugte Polyurethanzusammensetzung einen Anteil an organischen Lösungsmitteln, insbesondere organischen Lösungsmitteln mit einem Siedepunkt bei 23 °C von weniger als 200 °C, von weniger als 10 Gew.-%, weniger als 7.5 Gew.-%, weniger als 5 Gew.-% auf.

Vorzugsweise beträgt in der bevorzugten Polyurethanzusammensetzung die Gesamtmenge der Summe des Polyols **P1** und des Polyols **P2** mehr als 75 Gew.-%, vorzugsweise als 80 Gew.-%, als 90 Gew.-%, als 95 Gew.-%, insbesondere als 98 Gew.-%, der Polyolmischung **P.**

Vorzugsweise weist die Polyolmischung **P** mehr als 80 Gew.-%, insbesondere mehr als 90 Gew.-%, mehr als 95 Gew.-%, der Gesamtmenge der NCO-reaktiven Gruppen der bevorzugten Polyurethanzusammensetzung auf.

Vorzugsweise beträgt in der bevorzugten Polyurethanzusammensetzung der Anteil des aliphatischen Polyisocyanats **I** ≥ 90 Gew.-%, insbesondere ≥ 95 Gew.-%, insbesondere bevorzugt ≥99 Gew.-%, bezogen auf das Gesamtgewicht der zweiten Komponente.

Besonders bevorzugt ist in der bevorzugten Polyurethanzusammensetzung die Verbindung **T** nur in einer dritten Komponente **C,** bei welcher es sich nicht um die erste Komponente **A** oder die zweite Komponente **B** handelt, enthalten, vorzugsweise ist zusätzlich 20 Gew.-% - 70 Gew.-% des Zinnkatalysators **K,** bezogen auf die Gesamtmenge an Zinnkatalysator **K** in der Polyurethanzusammensetzung, in der dritten Komponente **C** enthalten.

Die Herstellung der beiden Komponenten **A** und **B** erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung enthaltend die erfindungsgemässe Polyurethanzusammensetzung, bestehend aus einer Verpackung mit mindestens zwei, insbesondere mindestens drei, vorzugsweise drei oder vier, am meisten bevorzugt drei, voneinander getrennten Kammern, welche jeweils die erste Komponente **A,** beziehungsweise die zweite Komponente **B,** respektive vorzugsweise die vorgehend erwähnte dritte Komponente **C,** der Polyurethanzusammensetzung enthält.

Besonders bevorzugt ist eine Packung bestehend aus einer Verpackung bestehend aus der vorgehend beschriebenen ersten Komponente **A,** der zweiten Komponente **B,** sowie der dritten Komponente **C.**

Die dritte Komponente **C** enthält insbesondere die vorgehend erwähnte Verbindung **T.** Vorzugsweise ist die Verbindung **T** nur in der dritten Komponente **C** enthalten und vorzugsweise ist zusätzlich 20 Gew.-% - 70 Gew.-% des Zinnkatalysators **K,** bezogen auf die Gesamtmenge an Zinnkatalysator **K** in der Polyurethanzusammensetzung, in der dritten Komponente **C** enthalten.

Das Mischen erfolgt typischerweise mit Hilfe von einem Handrührwerk. Beim Mischen ist darauf zu achten, dass die erste Komponente **A** und die zweite Komponente **B** möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente **A** mit der zweiten Komponente **B** beginnt die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die Erfindung betrifft somit auch ein Verfahren zur Herstellung einer Bauwerksabdichtung, insbesondere Dachabdichtung unter Verwendung der erfindungsgemässen Polyurethanzusammensetzung, wobei das Verfahren umfasst:
a) Mischen der ersten Komponente **(A)** und der zweiten Komponente **(B),** sowie des mindestens einen Füllstoffs **F,** des mindestens einen Zinnkatalysators **K** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um eine Bauwerksabdichtung, insbesondere Dachabdichtung, zu erhalten.

Bei den in Schritt a) beschriebenen ersten Komponente **(A),** zweiten Komponente **(B),** Füllstoff **F,** Zinnkatalysators **K** und Verbindung **T** handelt es sich vorzugsweise um die vorgehend als bevorzugt ausgewiesenen Ausführungsformen ebensolcher. Besonders bevorzugt entsteht in Schritt a) eine Mischung der erfindungsgemässen Polyurethanzusammensetzung, insbesondere einer vorgehend als besonders bevorzugt ausgewiesenen Polyurethanzusammensetzung.

Vorzugsweise erfolgen die Schritte a) - d) in eben dieser chronologischen Abfolge.

Es ist weiter vorteilhaft, wenn die Schritte a) - d) in einem Temperaturbereich von 5 °C bis 21 °C, vorzugsweise 5 °C bis 15 °C, insbesondere 5 °C bis 10 °C, insbesondere bevorzugt 4 °C bis 8 °C, ausgeführt werden. Vorzugsweise wird in Schritt a) eine vorgehend beschriebene Packung bestehend aus einer Verpackung bestehend aus der vorgehend beschriebenen ersten Komponente **A,** der zweiten Komponente **B** sowie gegebenenfalls der dritten Komponente **C** verwendet.

In einer bevorzugten Ausführungsform wird das Verfahren verwendet, um eine Balkonabdichtung oder eine Dachabdichtung auf mehrstöckigen Gebäuden, insbesondere auf Gebäuden mit mehr als 10 Stockwerken, herzustellen.

Bevorzugte Substrate, auf die die Polyurethanzusammensetzung aufgebracht werden kann, sind ausgewählt aus der Liste bestehend aus Beton, Ziegelstein, Stein, Asphalt, Bitumen und Metall, insbesondere Beton.

Vorzugsweise ist das Substrat ein vorhandeltes Substrat, vorzugsweise vorbehandelt mit einer Polyurethangrundierung oder einer Epoxidharzgrundierung. Vorzugsweise hat diese Grundierung eine Dicke von 0.1 - 1 mm, insbesondere 0.3 - 0.7 mm.

Das Aufbringen der Polyurethanzusammensetzung kann durch jedes übliche Verfahren erfolgen, insbesondere Beschichten, Gießen, Vergießen, Spachteln. Die erhaltene Bauwerksabdichtung, insbesondere Balkonabdichtung oder Dachabdichtung, hat vorzugsweise eine Dicke von 0.1 - 10 mm, 0.5 - 10 mm, insbesondere 1 - 8 mm, 1.5 - 6 mm, 1.5 - 4 mm, besonders bevorzugt 1.5 - 3 mm.

Die Anwendungstemperatur für die Polyurethanzusammensetzung beträgt vorzugsweise 5 °C bis 21 °C, vorzugsweise 5 °C bis 15 °C, insbesondere 5 °C bis 10 °C, insbesondere bevorzugt 4 °C bis 8 °C.

Die Erfindung betrifft auch den Bodenbelag, vorzugsweise eine Bauwerksabdichtung, insbesondere eine Balkonabdichtung oder eine Dachabdichtung, insbesondere Dachabdichtung auf mehrstöckigen Gebäuden, besonders bevorzugt auf Gebäuden mit mehr als 10 Stockwerken, die durch das erfindungsgemäße Verfahren erhältlich ist. Die Erfindung betrifft auch die Verwendung der Polyurethanzusammensetzung als Bauwerksabdichtung, insbesondere Balkonabdichtung oder Dachabdichtung.

Die Erfindung betrifft weiter die Verwendung der erfindungsgemässen Polyurethanzusammensetzung zur Herstellung von vorgehend beschriebenen Bauwerksabdichtungen, insbesondere Balkonabdichtungen oder Dachabdichtungen.

Vorzugsweise hat die Polyurethanzusammensetzung die folgenden Eigenschaften über den gesamten Temperaturbereich (bei 90 % relative Luftfeuchtigkeit) von 5 °C bis 21 °C:
- Topfzeit, insbesondere gemessen wie im experimentellen Teil beschreiben: 15 min - 45 min, insbesondere 15 - 32 min, insbesondere 16 -25 min;
- Aushärtungszeit, insbesondere gemessen wie im experimentellen Teil beschreiben: 60 min - 220 min, insbesondere 60 min - 205.

### Beispiele

### Verwendete Substanzen:

**Tabelle 1: Verwendete Substanzen.**

| | |
|---|---|
| P1 | Reaktionsprodukt von Rizinusöl mit Ketonharz, OH-Zahl von 150-190 mg KOH / g |
| P2 | Polyoxypropylentriol, Hydroxylzahl: 350 - 600 mg KOH/g |
| P3 | Polyoxypropylentriol, Hydroxylzahl: 26 - 30 mg KOH/g |
| Molekularsieb | Sylosiv^{®} A3 |
| Füllstoff | Mischung Titandioxid und Aluminiumhydroxid |
| Additive | Mischung aus Entschäumern (Anteil 12 Gew.-%), Dispergiermitteln (Anteil 8 Gew.-%) und aprotische Lösungsmitteln (Anteil 80 Gew.-%) |
| HDI | HDI-Trimer mit 70% Trimer und geringeren Mengen höherer Oligomere, Gesamt-NCO-Funktionalität = 3,1, Äquivalentgewicht 183 g / mol, NCO-Gehalt 22,5 - 23,5 Gewichts-%, Tolonate HDT-LV (VENCOREX) |
| IPDI | IPDI Trimer (70 %ig in Solventnaphtha 100), NCO-Gehalt 11.9 Gewichts-%, Desmodur Z 4470 SN (Covestra) |
| GDMP | Thiocure^{®} 320 (Bruno Bock Thiochemicals); Glycol-di(3-mercaptopropionat), Molekulargewicht 238.3 g/mol, 2-funktional. |
| Säure 1 | Benzolsulfonsäure (Benzensulfonsäure), Mw: 158.18 g/mol, CAS-Nummer:98-11-3, pKa: -2.8, SASOL Germany GmbH |
| Säure 2 | Ölsäure ((9Z)-Octadec-9-ensäure), Mw: 282.46 g/mol, CAS-Nummer:112-80-1, pKa: 5.02, Samuel Banner & Co Ltd |
| TIB Kat 318 | Dioctylzinndineodecanoat, TIB Kat 318 |

### Herstellung von Polyurethanzusammensetzungen und Messmethoden

Für jede Zusammensetzung wurden die in den Tabellen 2 und 3 angegebenen Inhaltsstoffe in den angegebenen Mengen (in Gewichtsteilen (Gew.-%)) der ersten Komponente **A** mittels eines Vakuumdissolvers unter Feuchtigkeitsausschluss zu einer homogenen Mischung verarbeitet und aufbewahrt. Ebenso wurden die in den Tabellen angegebenen Inhaltsstoffe der zweiten Komponente **B,** respektive Komponente **C,** verarbeitet und aufbewahrt. Das Molverhältnis zwischen freien NCO-Gruppen und NCO-reaktiven Gruppen betrug 1.05 (NCO/OH). Bei den Beispielen Ex.1 - Ex.3 handelt es sich um erfindungsgemässe Zusammensetzungen, bei den Beispielen Ref.1 - Ref.11 handelt es sich um Vergleichsbeispiele.

Zur Bestimmung der **Topfzeit** (TZ) wurde die Reaktionskurve bei 5 °C, 10 °C und bei 21 °C, in jedem Fall bei 90 % relativer Luftfeuchtigkeit (r. LF) bestimmt. Dazu wurden die Komponenten A, B und C bei den in den Tabellen 2 und 3 angegebenen Temperatur und relativer Feuchte temperiert. Die Komponenten werden ihrem Mischungsverhältnis entsprechend mittels eines Speed Mixer^{™} DAC 150.1 FVZKPG während 60 Sekunden bei 2000 U/min. Bei Mischstart beginnt die Zeitmessung und die Temperaturmessung erfolgt mithilfe eines Pt-100 Widerstandsthermometers, platziert mittig in der gemischten Zusammensetzung.

Nach dem Mischen der drei Komponenten setzt die Vernetzungsreaktion ein. Dies zeigt sich durch das Ansteigen der Viskosität und Erhöhung der Temperatur. Die Topfzeit ist die Zeitdauer bis zum Erreichen der kritischen Temperatur bzw. eine signifikante Änderung des Temperaturanstiegs. Zur Bestimmung der Reaktivität wird die Geschwindigkeit gemessen, in welcher eine Probe ihre Höchsttemperatur Tₘₐₓ erreicht. Der Temperaturverlauf gestattet eine vergleichende Beurteilung von Reaktionsharzmassen hinsichtlich ihrer Reaktivität.

Aus der Temperaturkurve kann die maximal erreichte Temperatur (Tmax), die Zeitdauer bis zum Erreichen von T=50°C abgelesen werden. Die Topfzeit wird aus dem aufgenommenen Temperatur-Zeit-Diagramm grafisch ermittelt. Die Messwerte werden als Lot der Tangentenschnittpunkte der ersten Steigungsänderung der Temperatur-Zeit-Kurve zur Zeitachse bestimmt. Die Lage des Schnittpunkts auf der Zeitachse ergibt die Topfzeit in Minuten.

Zur Bestimmung der **Aushärtungszeit** (AZ) wurde ein 1 mm dicker Film der gemischten Zusammensetzung auf eine harte Unterlage gegossen und die Zeit bis zur Klebfreiheit mit einem "Drying Time Tester Model 415" der Firma Erichsen nach DIN 53 150 & DIN ES ISO 1517 bestimmt. Die Aushärtungszeit des gegossenen Films wurde periodisch über die Zeit bestimmt durch Aufbringen einer Last von 2 kg, senkrecht auf ein auf die Oberfläche der Beschichtung gelegtes Filterpapier. Die Aushärtungszeit wurde als die Zeit bestimmt, in der das Papier bei anschließender Belastung mit 2 Kilo nicht an der Beschichtung haftete und keine sichtbaren Anzeichen einer Veränderung auf der beschichteten Oberfläche vorhanden waren, in Anlehnung an Prüfnorm DIN 53 150 (Trockengrad 4).

**Tabelle 2**

| | | **Ref.1** | **Ref.2** | **Ref.3** | **Ex.1** | **Ex.2** | **Ex.3** | **Ref.4** |
|---|---|---|---|---|---|---|---|---|
| **Comp.A** | | | | | | | | |
| P1 | | 30.394 | 30.38 | 30.364 | 29.768 | 29.723 | 29.678 | 30.900 |
| P2 | | 4.122 | 4.12 | 4.118 | 4.037 | 4.031 | 4.025 | 4.191 |
| Füllstoffe | | 32.362 | 32.341 | 32.321 | 30.82 | 30.751 | 30.692 | 33.03 |
| Additive | | 6 | 6 | 6 | 6 | 6 | 6 | 6 |
| Molekularsieb | | 1.5 | 1.5 | 1.5 | 1.5 | 1.5 | 1.5 | 1.5 |
| Säure 1 | | 0.15 | 0.15 | 0.15 | 0.15 | 0.15 | 0.15 | 0.15 |
| Tib Kat 318 | | 0.100 | 0.150 | 0.200 | 0.500 | 0.650 | 0.800 | 0.675 |
| **Comp.C** | | | | | | | | |
| GDMP | | 0.311 | 0.311 | 0.311 | 0.726 | 0.726 | 0.726 | 0 |
| P3 | | 1.141 | 1.141 | 1.141 | 1.723 | 1.723 | 1.723 | 0 |
| Tib Kat 318 | | 0.622 | 0.622 | 0.622 | 0.484 | 0.484 | 0.484 | 0.502 |
| **Comp.B** | | | | | 0.726 | 0.726 | 0.726 | |
| HDI | | 21.113 | 21.102 | 21.092 | 21.355 | 21.323 | 21.291 | 20.892 |
| IPDI | | 2.184 | 2.183 | 2.182 | 2.217 | 2.214 | 2.21 | 2.16 |
| **Total (Gew.-%)** | | **100** | **100** | **100** | **100** | **100** | **100** | **100** |
| | | | | | | | | |
| **NCO/OH** | | 1.05 | 1.05 | 1.05 | 1.05 | 1.05 | 1.05 | 1.05 |
| **T/K** | | 2.5 | 2.3 | 2.2 | 4.3 | 3.7 | 3.3 | 0.0 |
| **NCO/K** | | 116.0 | 108.4 | 101.8 | 86.1 | 74.7 | 65.9 | 70.4 |
| | | | | | | | | |
| TZ | 5°C / 90% r.LF (min) | 25 | 23 | 20 | 32 | 25 | 21 | 2 |
| AZ | | 192 | 187 | 180 | 205 | 191 | 183 | 140 |
| TZ | 10°C / 90% r.LF (min) | 22 | 20 | 18 | 27 | 22 | 18 | 2 |
| AZ | | 141 | 136 | 131 | 149 | 139 | 132 | 105 |
| TZ | 21°C / 90% r.LF (min) | 14 | 12 | 11 | 18 | 16 | 15 | 1 |
| AZ | | 68 | 65 | 62 | 66 | 63 | 60 | 58 |

**Tabelle 3**

| | | **Ref.5** | **Ref.6** | **Ex.2** | **Ref.7** | **Ref.8** | **Ref.9** | **Ref.10** | **Ref.11** |
|---|---|---|---|---|---|---|---|---|---|
| **Comp.A** | | | | | | | | | |
| P1 | | 29.723 | 29.723 | 29.723 | 29.723 | 29.723 | 29.723 | 29.723 | 29.723 |
| P2 | | 4.031 | 4.031 | 4.031 | 4.031 | 4.031 | 4.031 | 4.031 | 4.031 |
| Füllstoffe | | 31.581 | 31.531 | 30.751 | 30.404 | 31.531 | 31.431 | 31.231 | 31.131 |
| Additive | | 6 | 6 | 6 | 6 | 6 | 6 | 6 | 6 |
| Molekularsieb | | 1.5 | 1.5 | 1.5 | 1.5 | 1.5 | 1.5 | 1.5 | 1.5 |
| Säure 1 | | 0.05 | 0.1 | 0.15 | 0.5 | | | | |
| Säure 2 | | | | | | 0.1 | 0.2 | 0.4 | 0.5 |
| Tib Kat 318 | | 0.650 | 0.650 | 0.650 | 0.650 | 0.650 | 0.650 | 0.650 | 0.650 |
| **Comp.C** | | | | | | | | | |
| GDMP | | 0.725 | 0.725 | 0.726 | 0.725 | 0.725 | 0.725 | 0.725 | 0.725 |
| P3 | | 1.721 | 1.721 | 1.723 | 1.721 | 1.721 | 1.721 | 1.721 | 1.721 |
| Tib Kat 318 | | 0.483 | 0.483 | 0.484 | 0.483 | 0.483 | 0.483 | 0.483 | 0.483 |
| **Comp.B** | | | | 0.726 | 0.726 | | | | |
| HDI | | 21.323 | 21.323 | 21.323 | 21.323 | 21.323 | 21.323 | 21.323 | 21.323 |
| IPDI | | 2.214 | 2.214 | 2.214 | 2.214 | 2.214 | 2.214 | 2.214 | 2.214 |
| **Total (Gew.-%)** | | **100** | **100** | **100** | **100** | **100** | **100** | **100** | **100** |
| | | | | | | | | | |
| **NCO/OH** | | 1.05 | 1.05 | 1.05 | 1.05 | 1.05 | 1.05 | 1.05 | 1.05 |
| **mM Säure/100g** | | 0.32 | 0.63 | 0.95 | 3.16 | 0.35 | 0.71 | 1.42 | 1.77 |
| **T/K** | | 3.7 | 3.7 | 3.7 | 3.7 | 3.7 | 3.7 | 3.7 | 3.7 |
| **NCO/K** | | 74.7 | 74.7 | 74.7 | 74.7 | 74.7 | 74.7 | 74.7 | 74.7 |
| | | | | | | | | | |
| TZ | 5°C / 90% r.LF (min) | 15 | 19 | 25 | 38 | 15 | 18 | 29 | 39 |
| AZ | | 163 | 179 | 191 | 242 | 160 | 184 | 232 | 245 |
| TZ | 10°C / 90% r.LF (min) | 11 | 16 | 22 | 31 | 12 | 13 | 20 | 28 |
| AZ | | 114 | 121 | 139 | 196 | 115 | 124 | 165 | 172 |
| TZ | 21 °C / 90% r.LF (min) | 6 | 10 | 16 | 26 | 7 | 8 | 14 | 15 |
| AZ | | 50 | 57 | 63 | 89 | 50 | 55 | 60 | 68 |

## Patentansprüche

1. Polyurethanzusammensetzung umfassend eine erste Komponente **A** und eine zweite Komponente **B,** wobei
- die erste Komponente **A**
- eine Polyolmischung **P** aufweist, enthaltend
- mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1**:
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird; und
- vorzugsweise mindestens ein Polyol **P2** ausgewählt aus der Gruppe bestehend aus Polyesterpolyolen und Polyetherpolyolen; und
- die zweite Komponente **B**
- mindestens ein aliphatisches Polyisocyanat **I** umfasst;
wobei die Polyurethanzusammensetzung zusätzlich 5 Gew.-% bis 70 Gew.-%, vorzugsweise 20 Gew.-% bis 50 Gew.-%, mindestens eines Füllstoffs **F,** bezogen auf das Gesamtgewicht der Polyurethanzusammensetzung, aufweist,
und wobei die Polyurethanzusammensetzung zusätzlich 0.7 - 2.9 mM, bezogen auf 100 g der Polyurethanzusammensetzung, mindestens einer Säure **SA** mit einem pKₐ-Wert von ≤ 4.9 aufweist,
sowie mindestens einen Zinnkatalysator **K** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **K (T/K)** von 2.75:1 bis 10:1 liegt und das molare Verhältnis aller NCO-Gruppen der Polyurethanzusammensetzung zu allen Metallatomen des mindestens einen Zinnkatalysators **K (NCO/K)** vorzugsweise von 20 bis 200 liegt.

2. Polyurethanzusammensetzung gemäss Anspruch 1, **dadurch gekennzeichnet, dass** das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen.

3. Polyurethanzusammensetzung gemäss einem der vorhergehenden Ansprüche, **dadurch gekennzeichnet, dass** es sich bei dem Polyol **P2** um ein Polyetherpolyol handelt, insbesondere ausgewählt aus der Liste bestehend aus Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol, am meisten bevorzugt ist Polyoxypropylentriol.

4. Polyurethanzusammensetzung gemäss einem der vorhergehenden Ansprüche, **dadurch gekennzeichnet, dass** die mindestens eine Säure **SA** einen pKₐ-Wert von ≤ 3, vorzugsweise einen pKₐ-Wert von ≤ 1, insbesondere einen pKₐ-Wert von ≤ 0, aufweist.

5. Polyurethanzusammensetzung gemäss einem der vorhergehenden Ansprüche, **dadurch gekennzeichnet, dass** der Anteil der mindestens einen Säure **SA** 0.8 - 2.0 mM, vorzugsweise 0.9 - 1.5 mM, besonders bevorzugt 0.9 - 1.25 mM, bezogen auf 100 g der Polyurethanzusammensetzung, beträgt.

6. Polyurethanzusammensetzung gemäss einem der vorhergehenden Ansprüche, **dadurch gekennzeichnet, dass** es sich bei der mindestens einer Säure **SA** mit einem pKₐ-Wert von ≤ 5 um eine organische Säure, bevorzugt eine organische Sulfonsäure, handelt, insbesondere bevorzugt ausgewählt aus der Gruppe bestehend aus Methansulfonsäure, para-Toluolsulfonsäure, Benzolsulfonsäure, Dodecylbenzolsulfonsäure, Cyclododekansulfonsäure und Camphersulfonsäure, am meisten bevorzugt Benzolsulfonsäure.

7. Polyurethanzusammensetzung gemäss einem der vorhergehenden Ansprüche, **dadurch gekennzeichnet, dass** die Polyolmischung P mehr als 80 Gew .-%, mehr als 90 Gew .-%, insbesondere mehr als 95 Gew .-%, der Gesamtmenge der NCO-reaktiven Gruppen der Polyurethanzusammensetzung aufweist.

8. Polyurethanzusammensetzung gemäss einem der vorhergehenden Ansprüche, **dadurch gekennzeichnet, dass** es sich bei dem Zinnkatalysator K um eine Organozinn-Verbindung, insbesondere um eine Organozinn (IV)-Verbindung handelt.

9. Polyurethanzusammensetzung gemäss einem der vorhergehenden Ansprüche, **dadurch gekennzeichnet, dass** die Verbindung **T** nur in einer dritten Komponente **C,** bei welcher es sich nicht um die erste Komponente **A** oder die zweite Komponente **B** handelt, enthalten ist, vorzugsweise ist zusätzlich 20 Gew.-% - 70 Gew.-% des Zinnkatalysators **K,** bezogen auf die Gesamtmenge an Zinnkatalysator **K** in der Polyurethanzusammensetzung, in der dritten Komponente **C** enthalten.

10. Polyurethanzusammensetzung gemäss einem der vorhergehenden Ansprüche, **dadurch gekennzeichnet, dass** das molare Verhältnis **(T/K)** 3:1 bis 7.5:1, insbesondere 3.5:1 bis 5:1, am meisten bevorzugt 3.5:1 bis 4:1, beträgt.

11. Polyurethanzusammensetzung gemäss einem der vorhergehenden Ansprüche, **dadurch gekennzeichnet, dass** das molare Verhältnis **(NCO/K)** 50 bis 125, vorzugsweise 60 bis 100, am meisten bevorzugt 65 bis 85, beträgt.

12. Packung bestehend aus einer Verpackung enthaltend die Polyurethanzusammensetzung gemäss Anspruch 1 - 11 mit mindestens zwei, insbesondere mindestens drei, vorzugsweise drei oder vier, am meisten bevorzugt drei, voneinander getrennten Kammern, welche jeweils eine erste Komponente **A** oder eine zweite Komponente **B,** wie sie für die Polyurethanzusammensetzung gemäss Anspruch 1 - 11 beschrieben sind, enthalten, oder vorzugsweise eine dritte Komponente **C,** wie sie für die Polyurethanzusammensetzung gemäss Anspruch 9 beschrieben ist.

13. Verfahren zur Herstellung einer Bauwerksabdichtung, insbesondere Balkonabdichtung oder Dachabdichtung, unter Verwendung einer Polyurethanzusammensetzung gemäss Anspruch 1 - 11, wobei das Verfahren umfasst:
a) Mischen der ersten Komponente **(A)** und der zweiten Komponente **(B),** sowie des mindestens einen Füllstoffs **F,** des mindestens einen Zinnkatalysators **K** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um eine Bauwerksabdichtung, insbesondere Balkonabdichtung oder Dachabdichtung, erhalten.

14. Verfahren gemäss Anspruch 13, **dadurch gekennzeichnet, dass** die Schritte a) - d) in einem Temperaturbereich von 5 °C bis 21 °C, vorzugsweise 5 °C bis 15 °C, insbesondere 5 °C bis 10 °C, insbesondere bevorzugt 4 °C bis 8 °C, ausgeführt werden.

15. Verfahren gemäss Anspruch 13 oder 14, **dadurch gekennzeichnet, dass** in Schritt a) eine Packung gemäss Anspruch 12, insbesondere mit einer dritten Komponente **C,** verwendet wird.

16. Verwendung einer Polyurethanzusammensetzung gemäss einem der Ansprüche 1 - 11 als Bauwerksabdichtung, insbesondere Balkonabdichtung oder Dachabdichtung.
